# EUROPEAN PATENT APPLICATION

(11) **EP 2 492 968 A1**
(43) Date of publication of application: **29.08.2012**
(21) Application number: 10824411.2
(22) Date of filing: 30.07.2010
(51) Int. Cl.: H01L 31/048, H02G 3/08

(54) **JUNCTION BOX FOR PHOTOVOLTAIC COMPONENT**

(30) Priority: 22.10.2009 CN 200910234867; 28.05.2010 CN 201020209821 U
(71) Applicant: Lv, Jikun, Changzhou, Jiangsu 213138 (CN)
(72) Inventor: Lv, Jikun, Changzhou, Jiangsu 213138 (CN)
(74) Representative: Desormiere, Pierre-Louis
(86) International application number: PCT/CN2010/075570
(87) International publication number: WO 2011/047570

(57) **Abstract**

A junction box for a photovoltaic component comprises a base (1) and a cover (2). At least two junction devices (3) are disposed on the base (1). Two adjacent junction devices (3) are electrically connected with each other by a diode (4). Each junction device (3) comprises a metal connector (31) which has a horizontal sunken cambered surface (311) and is locked on the base (1). One end of the metal connector (31) is used for connecting with a busbar of the photovoltaic component, and the other end is connected with the connecting terminal (5) coupled with a photovoltaic cable. Pins of the diode (4) are provided with bended vertical portions (41) and horizontal portions (42). Each vertical portion (41) is connected with the metal connector (31) via a cylindrical contact. Each horizontal portion (42) is kept closed to the sunken cambered surface (311). A main body heat emission device (6) and a pin heat emission device (7) which be contacted with the inner surface of the cover (2) respectively are disposed own the diode (4); thereby the working heat of the diode (4) is transmitted to the cover (2) directly and is emitted.

## Description

### FIELD OF THE INVENTION

The present invention relates to a photovoltaic cell, and more particularly, a junction box for photovoltaic module.

### BACKGROUND OF THE INVENTION

At present, the material of the cover and the base of a junction box used in the photovoltaic cell electric power generation system on the market are common engineering plastic, the connection way between conductors are mainly contact fixation. When a junction box with such a structure is in operating, the diode inside the housing will generate plenty of heat, and the heat is transferred to the housing by the conduction and the convection of the air inside the housing, and then the heat is dissipated by conduction. However, as the air and the plastic has poor heat-conducting property, the heat accumulated in the housing can not be dissipated in time, causes the temperature in the housing would continue to rise. High temperature operating conditions will causes a sharp fall in the electric current conduction capacity of an diode, decreases the electric power generation efficiency of a photovoltaic module, shortens the service life of the diode, and increase the maintenance frequency of the module. Meaning while, excessive temperature accelerates the deformation and the aging of the housing, shortens the service life of a product. To resolve the dissipation problem of the diode, a solution widely used is fixing a heat-conduction rubber pad with high heat-absorbing efficiency on the inner face of the cover of the junction box, using the contact between the pad and the cover, the heat absorbed by the pad is transferred to the cover, and then is dissipated. But the heat conduction between the diode and the heat-conduction rubber pad in this conduction mode is still air-depended. Although the conduction speed is accelerated, and the dissipation efficiency is better than that of only air-depended conduction, it is difficult to realize the quick dissipation of the heat inside the junction box, and can not controlling the internal temperature of the junction box within a reasonable range to ensure the working stability of the diode and prolong the service life of the diode. Furthermore, flexible piece and small metal dots are widely used in contact places between the connections of the conductors in the existing junction box; such a structure causes the contact between the conductors to be point-contact, has too small contact area, increases the resistance, and decreases the electric power transferring efficiency of the product.

### SUMMARY OF THE INVENTION

The invention overcomes the disadvantages and shortcomings of the prior art by providing a junction box having better heat dissipation property, high conductivity, and good functional reliability for a photovoltaic module.

The technical solutions to resolve the technical problem is: the junction box for a photovoltaic (PV) module comprises a base and a cover fit on the base, at least two wire connecting devices are provided within the base. Two adjacent wire connecting devices are electrically connected by two diodes. The wire connecting device comprises a metal connection part which has a horizontal concave arc fit on the base, one terminal of the metal connection part is used to be connected with the bus bar of the PV module, and the other terminal can be connected with the wire connecting terminal of a PV cable. The pin of the diode has a vertical section and a horizontal section formed by bending, the vertical section is connected with the cylindrical contact of the metal connection part, and the horizontal section is contacts with the concave arc of the metal connection part. A body heat dissipation device and a pin heat dissipation device are arranged on the diode. The body heat dissipation device and the pin heat dissipation device contact with the inner surface of the cover respectively and transfer the heat generated from the diode during operating to the cover, and then the heat is dissipated.

More particularly, the body heat dissipation device has a heat-conducting silica gel pad arranged on the inner surface of the cover, the heat-conducting silica gel pad has a semicircle-arc fit in the outer surface arc of the diode. The semicircle-arc of the heat-conducting silica gel pad contacts with the outer surface arc of the diode after the cover is fit into the base. The pin heat dissipation device comprises a coil spring arranged on the middle portion of the metal connection part, the coil spring presses on the upper surface of the metal connection part. The bottom of the coil spring has a concave semicircle arc, which can press tightly on the horizontal section of the diode. The upside of the coil spring is sleeved with a heat-conducting insulating sleeve, the top plane of the heat-conducting insulating sleeve exactly fit on the surface of the heat-conducting silica gel pad.

A cover liner is fixed on the inner surface of the cover, and the cover liner presses the heat-conducting silica gel pad against the inner surface of the cover. The out surface of the cover has cooling fins formed by aluminum alloy integrated with the cover. The cooling fin has convex arc shape and is distributed at intervals on the out surface of the cover. The portion having large radiating area of the cooling fin is located above the diode.

The wire connecting device further comprises a bent spring, the metal connection part has a upright plane bent upwardly at the input terminal of the bar bus. The upright plane has a circular bend at its end, and has a section bending inward at the middle part. The section bending inward passes through a through hole provided on the middle part of the bent spring and clip the bent spring on the inner side face of the upright plane. The bent spring has an arc bending section at its top end, and the arc bending section is located in the outer side face of the upright plane and is elastically pressed on the circular bend located in the end of the upright plane, so as to clip tightly the bar bus of the PV module.

In order to disassemble the bent spring conveniently, the metal connecting part further includes a upright supporting frame nearby the bent spring, the upright supporting frame is bent and used to disassemble the bent spring conveniently.

To prevent the base from being influenced by the heat generated by the diode during operation, the inner surface of the base is provided with a temperature resisting strip-type insulating plate on the position opposite to the diode. The insulating plate has a strip-type groove for the attachment and alignment of the metal connecting part. To ensure the sealing property of the junction box, the base is provided with an annular sealing groove on the upper surface, and a sealing ring is arranged in the sealing groove. Screws are used to press tightly the sealing ring after the cover is fit on the base.

### TECHNICAL EFFECTS

A body heat dissipation device and a pin heat dissipation device is provided on the diode in the invention, so the air conduction having inefficiencies is avoided, and the heat generated from the diode during operation is directly transferred to the cover by the heat-conducting silica gel pad and then is quickly dissipated, therefore, the overall dissipation performance of the junction box is improved, the internal temperature of the junction box can be controlled within a reasonable range, the working stability and the service life of the diode are ensured. Meaning while, the connections between conductors are all plane or cylindrical, which is benefit for decreasing the contacting resistance and enlarging the contacting areas between conductors, thus the electric energy transmission efficiency of the junction box is overall improved.

### BRIEF DESCRPTION OF THE DRAWINGS

Other features and advantages of the invention will be apparent from the following detailed descriptions of preferred embodiments thereof when read in conjunction with reference to the accompanying drawings, wherein:
FIG.1 is a structure schematic view of the invention;
FIG.2 is a cross sectional view along A-A line indicated in FIG.1;
FIG.3 is a cross sectional view along B-B line indicated in FIG.1;
FIG.4 is a cross sectional view along C-C line indicated in FIG.1;
FIG.5 is a cross sectional view along D-D line indicated in FIG.1;
FIG.6 is a partial enlarged view of E indicated in FIG.5.

In drawing:
1. base
1.1 sealing groove
2. cover
21. cooling fin
3. wire connecting device
31. metal connection part
311. concave arc
312. upright plane
313. circular bend
314. Section bending inward
315. upright supporting frame
32. bent spring
321. through hole
322. arc bending section
4. diode
41. vertical section
42. horizontal section
5. wire connecting terminal
6. body heat dissipation device
61. heat-conducting silica gel pad
611. semicircle-arc
7. pin heat dissipation device
71. coil spring
72. heat-conducting insulating sleeve
8. insulating plate
81. strip-type groove
9. cover liner
10. sealing ring
11. screw
12. circulating path

### PREFERRED EMBODIMENTS

### Detailed description of the invention will be made in conjunction with drawings.

Drawings are all simplified and schematic, and only intend to illustrate schematically the basal structure of the invention, and therefore, they only show the structure related to the invention.

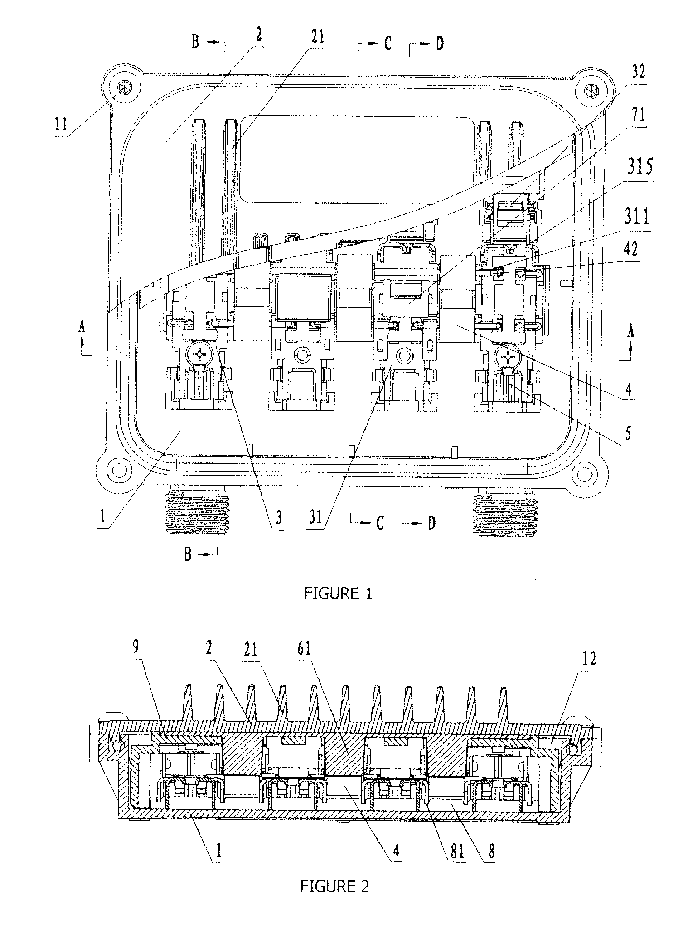

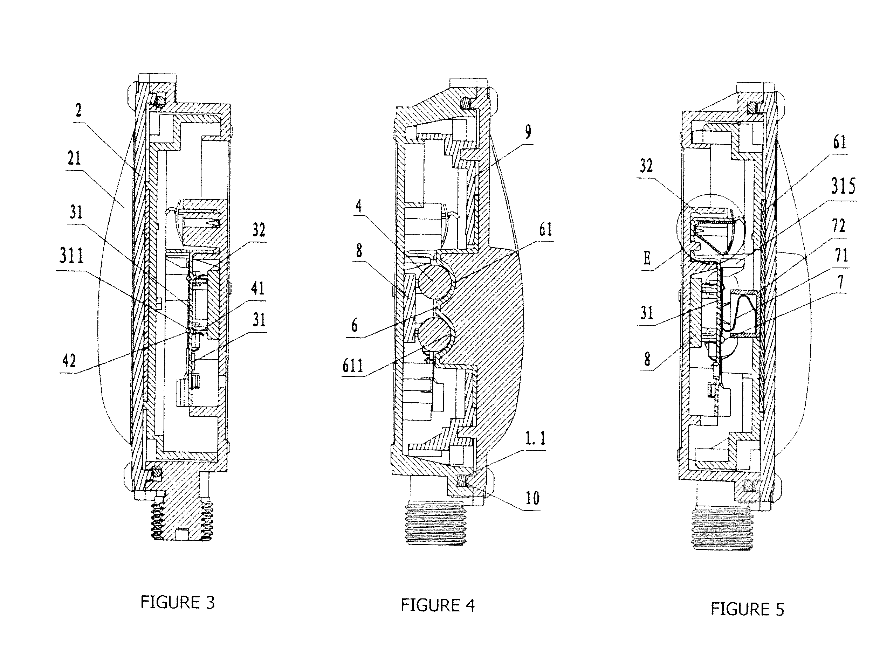

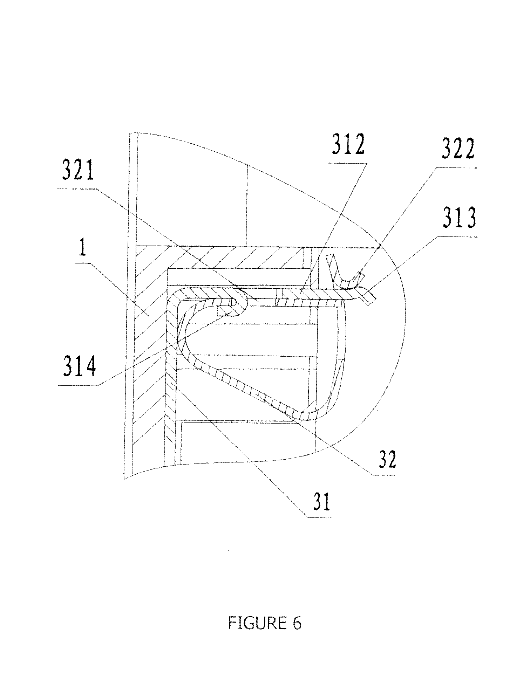

The junction box for a photovoltaic (PV) module, shown in FIGS.1-6, comprises a base 1 and a cover 2 fit on the base 1. The cover 2 is made of aluminum alloy material with good heat dissipation efficiency, the base 1 is provided with an annular sealing groove 1.1 on the upper surface, and a sealing ring 10 is arranged in the sealing groove 1.1. After the cover 2 fits on the base 1 and is fixed to the base 1, the peripheral of the cover 2 embeds into the sealing groove 1.1 and is locked by a screw 13 so as to compress tightly the sealing ring 10, therefore, when it is used, the sealing characteristics of the junction box is preferably improved. Four parallel arranged wire connecting devices 3 are provided within the base 1. Two adjacent wire connecting devices 3 are electrically connected with two diodes 4. The wire connecting device 3 comprises a metal connection part 31 which has a horizontal concave arc 311 fit on the base 1, one terminal of the metal connection part 31 is used to be connected with the bus bar of a PV module, and the other terminal can be connected with the wire connecting terminal 5 of the PV cable. One end of the wire connecting terminal 5 is fixed to a wire connecting plane extending on the head of the metal connection part 31 by a self tapping screw, and the other end has a U-shaped opening which is used to wrap the PV cable to be connected. The pin of the diode 4 has a vertical section 41 and a horizontal section 42 formed by bending, the vertical section 41 is inserted vertically into the metal connection part 31 and is connected with the metal connection part 31 by cylindrical contact, and the horizontal section 42 is contacts with the concave arc 311 of the metal connection part 31. In order to dissipate the heat generated from the diode 4 during operation as soon as possible, and to ensure the internal temperature of the junction box in a reasonable orange, a body heat dissipation device 6 and a pin heat dissipation device 7 are arranged on the diode 4. The body heat dissipation device 6 comprises a heat-conducting silica gel pad 61, and the heat-conducting silica gel pad 61 is pressed tightly and fits on the inner surface of the cover 2 by a cover liner 9 arranged on the inner surface of the cover 2. The heat-conducting silica gel pad 61 has a semicircle-arc 611 fit in the outer surface arc of the diode 4. After the cover 2 is fit into the base 1, the semicircle-arc 611 of the heat-conducting silica gel pad 61 contacts with the outer surface arc of the diode 4, therefore, the heat from the diode 4 can be directly transferred to the heat-conducting silica gel pad 61 and is quickly dissipated by the cover 2. The pin heat dissipation device 7 comprises a coil spring 71 arranged on the middle portion of the metal connection part 31, the coil spring 71 presses on the upper surface of the metal connection part 31. The bottom of the coil spring 71 has a concave semicircle arc, which can press tightly on the horizontal section 42 of the diode 4. After the coil spring 71 being pressed on the metal connection part 31, the concave semicircle arc of the coil spring 71 presses the horizontal section 42 of the diode 4 on the concave arc 311 of the metal connection part 31. The coil spring 71, made of high thermal conductivity material, is directly fit on the pin having highest temperature of the diode 4. The upside of the coil spring 71 is sleeved with a heat-conducting insulating sleeve 72, and when the cover 2 is fit on the base 1, the top of the heat-conducting insulating sleeve 72 exactly fit on the surface of the heat-conducting silica gel pad 61. When the diode 4 is working, the heat generated from the pin is directly absorbed by the coil spring 71 and transferred to the heat-conducting silica gel pad 61 by the heat-conducting insulating sleeve 72, and then transferred to the cover 2 to be quickly dissipated. To make the heat absorbed by the cover 2 quickly dissipate, the out surface of the cover 2 has cooling fins 21 formed integrated with the cover 2. The cooling fin 21 has convex arc shape and is distributed at intervals on the out surface of the cover 2. The portion having large radiating area of the cooling fin 21 is faced to a place where has most concentrated heat above the diode 4. Meaning while, the arrangement direction of the cooling fin 21 is in accordance with the air convection, so as to realize the quick dissipation of the heat. The wire connecting device 3 further comprises a bent spring 32, the connection part 31 has a upright plane 312 bent upwardly at the input terminal of the bar bus. The upright plane 312 has a circular bend 313 at its end, and has a section bending inward 314 at the middle part. The section bending inward 314 passes through the through hole 321 provided on the middle part of the bent spring 32 and clip the bent spring 32 on the inner side face of the upright plane 312. The bent spring 32 has a arc bending section 322 at its top end, and the arc bending section 322 is located in the out side face of the upright plane 312 and is elastically pressed on the circular bend 313 located in the end of the upright plane 312, so as to clip tightly the bar bus of the PV module. At the same time, in order to disassemble the bent spring 32 conveniently, the metal connection part 31 further includes an upright supporting frame 315 nearby the bent spring 32, the upright supporting frame 315 is bent and used to disassemble the bent spring 32 conveniently. When a tool is used to pry the bent spring 32, the fulcrum of the prying force acts on the upright supporting frame 315. Such a structure provides a firm support and simplifies the structure, furthermore, the expanding area is benefit for the dissipation of the heat.

To prevent the base 1 from deforming by heat, the inner surface of the base 1 is provide with a temperature resisting strip-type insulating plate 8 on the position opposite to the diode 4. The insulating plate 8 has a strip-type groove 81 for the attachment and the alignment of the metal connection part 31. When the diode 4 is working, the temperature of the pin gets very high, the heat transferred to the metal connection part 31 will easily make the plastic part contacting with the metal connection part 31 to plasticize and deform. Therefore, a high temperature resistance insulating plate 8 is provided on the bottom undergoing force zrea, where has highest temperature, of the metal connection part 31, therefore the plastic part, undergoing the force exerted by the metal connection part 31, will not deform in high temperature condition, meaning while, the plastic part, contacting with the other low temperature area of the metal connection part 31 will not deform.

At the same time, in order to realize the dissipation of the heat generated from the diode 4 through the cover 2 in a circulating flow way, a circulating path 12 is formed between the out side face of the cover liner 9 and the inner side faces of the base 1 and the cover 2 after the overall fixation and installation of the junction box is finished. When current passes through the diode, 4, some of the heat generated from the diode 4 is directly transferred to the cover 2 by the heat-conducting silica gel pad 61 and then is dissipated, another portion of heat causes the temperature in the base 1 to rise, hot air goes upwards and enters the circulating path 12 to flow, and then is cooled by a low temperature inner wall of the cover 2. The temperature of the air is brought down and flows downwards, and the air is continuously cooled and flows back to the inside of the base 1. Thus, the heat generated from the diode 4 during working can be transferred to the cover 2 by the heat-conducting silica gel pad 61 and then is quickly dissipated by the cover 2 and the cooling fin 21, as well as the internal temperature of the junction box is brought down by the circular flow of the air. The heat transfering fully depended on inefficiencies air heat conduction is avoided, and the heat in the base 1 is more directly transferred to the outside, thus, it is benefit for the quick dissipating of the heat and the improvement of the working condition of the diode 4, furthermore, it is benefit for retarding the aging of the plastic part used in the junction box and reducing the deformation of the plastic part.

The invention applies various spreading heat way. The heat generated by the diode 4 during working is quickly dissipated, and the overall heat dissipation performance of the junction box is improved; keeping the internal temperature of the junction box in a reasonable range and the working stability and service life of the diode 4 are ensured. Meaning while, the connections between conductors are all plane or cylindrical, which is benefit for decreasing the contacting resistance and enlarging the contacting areas between conductors, thus the electric energy transmission efficiency of the junction box is overall improved. As a result, the problems existing in current junction box used in the PV power generation system, such as bad heat dissipation efficiency, low conductivity between conductors, short service life of the diode 4 and low stability, are solved.

## Claims

1. A junction box for a photovoltaic(PV) module, comprises a base (1) and a cover (2) fit on the base; at least two wire connecting devices (3) are provided on the base (1), two adjacent wire connecting devices (3) are electrically connected with diodes (4), wherein:
the wire connecting devices (3) comprises a metal connection part (31) which has a horizontal concave arc (311) fit on the base (1), one terminal of the metal connection part (31) is used to be connected with the bus bar of the PV module, and the other terminal can be connected with the wire connecting terminal (5) of the PV cable; the pin of the diode (4) has a vertical section (41) and a horizontal section (42) formed by bending, the vertical section (41) is connected with the metal connection part (31) by cylindrical contact, and the horizontal section (42) contacts with the concave arc (311) of the metal connection part (31); a body heat dissipation device (6) and a pin heat dissipation device (7) are arranged on the diode (4), the body heat dissipation device (6) and the pin heat dissipation device (7) contact with the inner surface of the cover (2) respectively and transfer directly the heat generated from the diode (4) during operation to the cover (2), and the heat is then dissipated.

2. The junction box for a photovoltaic module as set forth in claim 1, wherein the body heat dissipation device (6) comprises a heat-conducting silica gel pad (61) arranged on the inner surface of the cover (2), the heat-conducting silica gel pad (61) has a semicircle-arc (611) fit with the outer surface arc of the diode (4); after the cover (2) is fit into the base (1), the semicircle-arc (611) of the heat-conducting silica gel pad (61) contacts with the outer surface arc of the diode (4).

3. The junction box for a photovoltaic module as set forth in claim 2, wherein the pin heat dissipation device (7) comprises a coil spring (71) arranged on the middle portion of the metal connection part (31), the coil spring (71) presses on the upper surface of the metal connection part (31), and the bottom of the coil spring (71) has a concave semicircle arc, which can press tightly on the horizontal section (42) of the diode, the upside of the coil spring (71) is sleeved with a heat-conducting insulating sleeve (72), the top plane of the heat-conducting insulating sleeve (72) exactly fit on the surface of the heat-conducting silica gel pad (61).

4. The junction box a for photovoltaic module as set forth in claim 2, wherein a cover liner (9) is fixed on the inner surface of the cover (2), and the cover liner (9) presses the heat-conducting silica gel pad (61) against the inner surface of the cover (2); the outer surface of the cover (2) has cooling fins (21) formed by aluminum alloy integrated with the cover (2), the cooling fin (21) has a convex arc shape and is distributed at intervals on the outer surface of the cover (2), and the portion having large radiating area of the cooling fin (21) is located above the diode (4).

5. The junction box a for photovoltaic module as set forth in claim 1, wherein the wire connecting devices (3) further comprises a bent spring (32), the metal connection part (31) has a upright plane (312) bent upwardly at the input terminal of the bar bus, the upright plane (312) has a circular bend (313) at its end, and has a section (314) bent inward at the middle part; the section (314) bent inward passes through a through hole (312) provided on the middle part of the bent spring (32) and clip the bent spring (32) on the inner side face of the upright plane (312); the bent spring (32) has an arc bent section (322) at its top end, and the arc bent section (322) is located in the outer side face of the upright plane (312) and is elastically pressed on the circular bend (313) located on the end of the upright plane (312), so as to clip tightly the bar bus of the PV module.

6. The junction box a for photovoltaic module as set forth in claim 5, wherein the metal connection part (31) further includes a upright supporting frame (315) nearby the bent spring (32), the upright supporting frame (315) is bent and used to disassemble the bent spring (32) conveniently.

7. The junction box for a photovoltaic module as set forth in clam 1, wherein the inner surface of the base (1) is provided with a temperature resisting strip-type insulating plate (8) on the position opposite to the diode (4); the insulating plate (8) has a strip-type groove (81) for the attachment and the alignment of the connection part (31).

8. The junction box for a photovoltaic module as set forth in claim 1, wherein the base (1) is provided with an annular sealing groove (1.1) on the upper surface, and a sealing ring (10) is arranged in the sealing groove (1.1); screws (11) are used to press tightly the sealing ring (10) after the cover (2) is fit into the base (1).
